# EUROPÄISCHE PATENTSCHRIFT

(11) **EP 1 399 523 B1**
(45) Veröffentlichungstag und Bekanntmachung des Hinweises auf die Patenterteilung: **03.11.2004**
(21) Anmeldenummer: 02745366.1
(22) Anmeldetag: 06.06.2002
(51) Int. Cl.: C09K 5/20, H01M 8/04

(54) **KÜHLMITTEL FÜR KÜHLSYSTEME IN BRENNSTOFFZELLENANTRIEBEN ENTHALTEND AZOLDERIVATE**
COOLING AGENTS FOR COOLING SYSTEMS IN FUEL CELL DRIVES CONTAINING AZOLE DERIVATIVES
REFRIGERANTS DESTINES A DES SYSTEMES DE REFROIDISSEMENT DANS DES ENTRAINEMENTS A PILES A COMBUSTIBLE ET CONTENANT DES DERIVES D'AZOLE

(30) Priorität: 13.06.2001 DE 10128530
(43) Veröffentlichungstag der Anmeldung: 24.03.2004
(73) Patentinhaber: BASF AKTIENGESELLSCHAFT, 67056 Ludwigshafen (DE)
(72) Erfinder: WENDEROTH, Bernd, 69488 Birkenau (DE); DAMBACH, Stefan, 67454 Hassloch (DE); MESZAROS, Ladislaus, 67112 Mutterstadt (DE); FIDORRA, Uwe, 67157 Wachenheim (DE)
(86) Internationale Anmeldenummer: PCT/EP2002/006194
(87) Internationale Veröffentlichungsnummer: WO 2002/101848

(56) Entgegenhaltungen:
- WO-A-01/23495
- DE-A- 19 955 704
- US-A- 4 460 478

## Beschreibung

Die vorliegende Erfindung betrifft Kühlmittel für Kühlsysteme in Brennstoffzellenantrieben, insbesondere für Kraftfahrzeuge, auf Basis von Alkylenglykolen oder deren Derivaten, welche spezielle Azolderivate als Korrosionsinhibitoren enthalten.

Brennstoffzellen für den mobilen Einsatz in Kraftfahrzeugen müssen auch bei niedrigen Außentemperaturen von bis zu etwa -40°C betrieben werden können. Ein frostgeschützter Kühlmittelkreislauf ist deshalb unerlässlich.

Die Verwendung von bei Verbrennungsmotoren eingesetzten herkömmlichen Kühlerschutzmitteln wäre bei Brennstoffzellen ohne eine vollständige elektrische Isolierung der Kühlkanäle nicht möglich, da diese Mittel wegen der darin als Korrosionsinhibitoren enthaltenen Salze und ionisierbaren Verbindungen eine zu hohe elektrische Leitfähigkeit haben, was die Funktion der Brennstoffzelle negativ beeinträchtigen würde.

Die DE-A 198 02 490 (1) beschreibt Brennstoffzellen mit einem frostgeschützten Kühlkreislauf, bei dem als Kühlmittel eine paraffinische Isomerenmischung mit einem Pour Point von kleiner als -40°C verwendet wird. Nachteilig ist jedoch die Brennbarkeit eins solchen Kühlmittels.

Aus der EP-A 1 009 050 (2) ist ein Brennstoffzellensystem für Automobile bekannt, bei dem als Kühlmedium Luft verwendet wird. Nachteilig ist dabei allerdings, daß Luft bekanntlich ein schlechterer Wärmeleiter als ein flüssiges Kühlmedium ist.

Die WO 00/17951 (3) beschreibt ein Kühlsystem für Brennstoffzellen, bei dem als Kühlmittel ein reines Monoethylenglykol/Wasser-Gemisch im Verhältnis 1:1 ohne Additive eingesetzt wird. Da wegen fehlender Korrosionsinhibitoren keinerlei Korrosionsschutz gegenüber den im Kühlsystem vorhandenen Metallen vorhanden wäre, enthält der Kühlkreislauf eine Ionenaustauscher-Einheit, um die Reinheit des Kühlmittels zu erhalten und um längere Zeit eine niedrige spezifische Leitfähigkeit zu gewährleisten, wodurch Kurzschlüsse und Korrosion verhindert werden. Als geeignete Ionenaustauscher werden anionische Harze wie zum Beispiel vom stark alkalischen Hydroxyl-Typ und kationische Harze wie zum Beispiel auf Sulfonsäuregruppen-Basis sowie andere Filtrationseinheiten wie zum Beispiel Aktivkohlefilter genannt.

Der Aufbau und die Funktionsweise einer Brennstoffzelle für Automobile, insbesondere einer Brennstoffzelle mit elektronenleitender Elektrolytmembran ("PEM-Brennstoffzelle", "polymer electrolyte membrane fuel cell") ist in (3) exemplarisch beschrieben, wobei als bevorzugte Metallkomponente im Kühlkreislauf (Kühler) Aluminium bevorzugt wird.

Die DE-A 100 63 951 (4) beschreibt Kühlmittel für Kühlsysteme in Brennstoffzellenantrieben, die ortho-Kieselsäureester als Korrosionsinhibitoren enthalten.

Der Einsatz von Azolderivaten wie Benzimidazol, Benzotriazol oder Tolutriazol als Korrosionsinhibitoren in Kühlerschutzmitteln für herkömmliche, mit Otto- oder Dieselkraftstoff betriebene Verbrennungsmotoren ist seit langem bekannt, beispielsweise aus: G. Reinhard et al., "Aktiver Korrosionsschutz in wäßrigen Medien", S. 87-98, expert-Verlag 1995 (ISBN 3-8169-1265-6).

Die Verwendung von derartigen Azolderivaten in Kühlmitteln für Kühlsysteme in Brennstoffzellenantrieben ist bisher nicht bekannt.

Ein Hauptproblem bei Kühlsystemen in Brennstoffzellenantrieben ist die Aufrechterhaltung einer niedrigen elektrischen Leitfähigkeit des Kühlmittels, um eine sichere und störungsfreie Funktion der Brennstoffzelle zu gewährleisten und dauerhaft Kurzschlüsse und Korrosion zu verhindern.

Überraschenderweise wurde nun gefunden, daß sich die Zeitdauer für eine niedrige elektrische Leitfähigkeit in einem Kühlsystem auf Basis Alkylenglykol/wasser, auch und insbesondere wenn es gemäß (3) einen integrierten Ionenaustauscher enthält, durch die Zugabe geringer Mengen von Azolderivaten deutlich verlängern läßt. Dies bietet für die Praxis den Vorteil, daß sich die Zeitintervalle zwischen zwei Kühlmittelwechseln bei Brennstoffzellenantrieben weiter ausdehnen lassen, was insbesondere im Automobilsektor von Interesse ist.

Demgemäß wurden Gefrierschutzmittelkonzentrate für Kühlsysteme in Brennstoffzellen-antrieben, aus welchen gebrauchsfertige wäßrige Kühlmittelzusammensetzungen mit einer Leitfähigkeit von maximal 50 µS/cm resultieren, auf Basis von Alkylenglykolen oder deren Derivaten gefunden, welche eine oder mehrere fünfgliedrige heterocyclische Verbindungen (Azolderivate) mit 2 oder 3 Heteroatomen aus der Gruppe Stickstoff und Schwefel, welche kein oder maximal ein Schwefelatom enthalten und welche einen aromatischen oder gesättigten sechsgliedrigen Anellanten tragen können, enthalten. Bevorzugt werden hierbei Gefrierschutzmittelkonzentrate, welche insgesamt 0,05 bis 5 Gew.-%, insbesondere 0,075 bis 2,5 Gew.-%, vor allem 0,1 bis 1 Gew.-% der genannten Azolderivate enthalten.

Diese fünfgliedrigen heterocyclischen Verbindungen (Azolderivate) enthalten als Heteroatome üblicherweise zwei N-Atome und kein S-Atom, 3 N-Atome und kein S-Atom oder ein N-Atom und ein S-Atom.

Bevorzugte Gruppen der genannten Azolderivate sind anellierte Imidazole und anellierte 1,2,3-Triazole der allgemeinen Formel (I) oder (II), 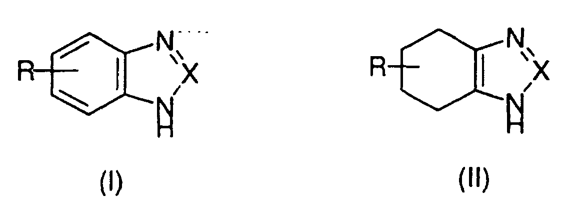 in denen die Variable R Wasserstoff oder einen C₁- bis C₁₀-Alkylrest, insbesondere Methyl oder Ethyl, bedeutet und die Variable X ein Stickstoffatom oder die Gruppierung C-H bezeichnet. Typische Beispiele für Azolderivate der allgemeinen Formel (I) sind Benzimidazol (X = C-H, R = H), Benzotriazol (X = N, R = H) und Tolutriazol (Tolyltriazol) (X = N, R = CH₃). Ein typisches Beispiel für ein Azolderivat der allgemeinen Formel (II) ist hydriertes 1,2,3-Tolutriazol (Tolyltriazol) (X = N, R = CH₃).

Eine weitere bevorzugte Gruppe der genannten Azolderivate sind Benzthiazole der allgemeinen Formel (III) 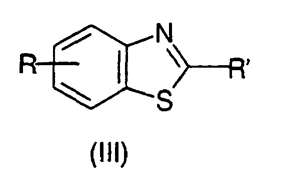 in der die Variable R die oben genannte Bedeutung hat und die Variable R' Wasserstoff, einen C₁- bis C₁₀-Alkylrest, insbesondere Methyl oder Ethyl, oder insbesondere die Mercaptogruppe (-SH) bezeichnet. Ein typisches Beispiel für ein Azolderivat der allgemeinen Formel (III) ist 2-Mercaptobenzthiazol.

Weiterhin werden nicht-anellierte Azolderivate der allgemeinen Formel (IV) 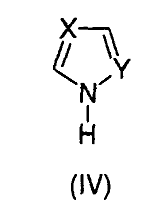 in der die Variablen X und Y zusammen zwei Stickstoffatome oder ein Stickstoffatom und eine Gruppierung C-H bezeichnen, beispielsweise 1H-1,2,4-Triazol (X = Y = N) oder Imidazol (X = N, Y = C-H) bevorzugt.

Ganz besonders bevorzugt werden für die vorliegende Erfindung als Azolderivate Benzimidazol, Benzotriazol, Tolutriazol, hydriertes Tolutriazol oder Mischungen hieraus.

Die genannten Azolderivate sind kommerziell verfügbar oder nach gängigen Methoden herstellbar. Hydrierte Benzotriazole wie hydriertes Tolutriazol sind ebenfalls gemäß DE-A 1 948 794 (5) zugänglich und auch kommerziell verfügbar.

Neben den genannten Azolderivaten enthalten die erfindungsgemäßen Gefrierschutzmittelkonzentrate vorzugsweise zusätzlich ortho-Kieselsäureester, wie sie in (4) beschrieben werden. Typische Beispiele für derartige ortho-Kieselsäureester sind Tetraalkoxysilane wie Tetraethoxysilan. Bevorzugt werden hierbei Gefrierschutzmittelkonzentrate, insbesondere solche mit einem Gehalt an insgesamt 0,05 bis 5 Gew.-% der genannten Azolderivate, aus welchen gebrauchsfertige wäßrige Kühlmittelzusammensetzungen mit einem Siliziumgehalt von 2 bis 2000 Gew.-ppm Silizium, insbesondere 25 bis 500 Gew.-ppm Silizium, resultieren.

Aus den erfindungsgemäßen Gefrierschutzmittelkonzentraten lassen sich durch Verdünnen mit ionenfreiem Wasser gebrauchsfertige wäßrige Kühlmittelzusammensetzungen mit einer Leitfähigkeit von maximal 50 µS/cm, die im wesentlichen aus
(a) 10 bis 90 Gew.-% Alkylenglykolen oder deren Derivaten,
(b) 90 bis 10 Gew.-% Wasser,
(c) 0,005 bis 5 Gew.-%, insbesondere 0,0075 bis 2,5 Gew.-%, vor allem 0,01 bis 1 Gew.-%, der genannten Azolderivaten, und
(d) ortho-Kieselsäureestern
bestehen, herstellen. Die Summe aller Komponenten beträgt hierbei 100 Gew.-%.

Gegenstand der vorliegenden Erfindung sind somit auch gebrauchsfertige wäßrige Kühlmittelzusammensetzungen für Kühlsysteme in Brennstoffzellenantrieben, die im wesentlichen aus
(a) 10 bis 90 Gew.-% Alkylenglykolen oder deren Derivaten,
(b) 90 bis 10 Gew.-% Wasser,
(c) 0,005 bis 5 Gew.-%, insbesondere 0,0075 bis 2,5 Gew.-%, vor allem 0,01 bis 1 Gew.-%, der genannten Azolderivaten, und
(d) ortho-Kieselsäureestern
bestehen und die durch Verdünnen der genannten Gefrierschutzmittelkonzentraten mit ionenfreiem Wasser erhältlich sind. Die Summe aller Komponenten beträgt hierbei 100 Gew.-%.

Die erfindungsgemäßen gebrauchsfertigen wäßrigen Kühlmittelzusammensetzungen weisen eine anfängliche elektrische Leitfähigkeit von maximal 50 µS/cm, insbesondere 25 µS/cm, vorzugsweise 10 µS/cm, vor allem 5 µS/cm, auf. Die Leitfähigkeit wird im Dauerbetrieb des Brennstoffzellenantriebes über mehrere Wochen oder Monate auf diesem niedrigen Niveau gehalten, insbesondere wenn im Brennstoffzellenantrieb ein Kühlsystem mit integriertem Ionenaustauscher verwendet wird.

Der pH-Wert der erfindungsgemäßen gebrauchsfertigen wäßrigen Kühlmittelzusammensetzungen fällt über die Betriebsdauer deutlich langsamer ab als bei nicht mit den genannten Azolderivaten additivierten Kühlflüssigkeiten. Der pH-Wert liegt üblicherweise im Bereich von 4,5 bis 7 bei frischen erfindungsgemäßen Kühlmittelzusammensetzungen und fällt im Dauerbetrieb meist bis auf 3,5 ab. Das zum Verdünnen verwendete ionenfreie Wasser kann reines destilliertes oder bidestilliertes Wasser oder beispielsweise durch Ionenaustausch entionisiertes Wasser sein.

Das bevorzugte Gew.-Mischungsverhältnis von Alkylenglykol bzw. deren Derivaten zu Wasser in den gebrauchsfertigen wäßrigen Kühlmittelzusammensetzungen beträgt 20:80 bis 80:20, insbesondere 25:75 bis 75:25, vorzugsweise 65:35 bis 35:65, vor allem 60:40 bis 40:60. Als Alkylenglykol-Komponente bzw. Derivate hiervon können insbesondere Monoethylenglykol, daneben aber auch Monopropylenglykol, Polyglykole, Glykolether oder Glycerin jeweils allein oder als Mischungen hieraus verwendet werden. Besonders bevorzugt werden Monoethylenglykol allein oder Mischungen von Monoethylenglykol als Hauptkomponente, d.h. mit einem Gehalt in der Mischung von mehr als 50 Gew.-%, insbesondere von mehr als 80 Gew.-%, vor allem von mehr als 95 Gew.-%, mit anderen Alkylenglykolen oder Derivaten von Alkylenglykolen.

Die erfindungsgemäßen Gefrierschutzmittelkonzentrate selbst, aus denen die beschriebenen gebrauchsfertigen wäßrigen Kühlmittelzusammensetzungen resultieren, lassen sich durch Auflösen der genannten Azolderivate in Alkylenglykolen oder deren Derivaten, die wasserfrei oder mit einem geringen Gehalt an Wasser (etwa bis zu 10 Gew.-%, insbesondere bis zu 5 Gew.-%) eingesetzt werden können, herstellen.

Gegenstand der vorliegenden Erfindung ist auch die Verwendung von fünfgliedrigen heterocyclischen Verbindungen (Azolderivaten) mit 2 oder 3 Heteroatomen aus der Gruppe Stickstoff und Schwefel, welche kein oder maximal ein Schwefelatom enthalten und welche einen aromatischen oder gesättigten sechsgliedrigen Anellanten tragen können, zur Herstellung von Gefrierschutzmittelkonzentraten für Kühlsysteme in Brennstoffzellenantrieben, insbesondere für Kraftfahrzeuge, auf Basis von Alkylenglykolen oder deren Derivaten.

Gegenstand der vorliegenden Erfindung ist weiterhin die Verwendung dieser Gefrierschutzmittelkonzentrate zur Herstellung von gebrauchsfertigen wäßrigen Kühlmittelzusammensetzungen mit einer Leitfähigkeit von maximal 50 µS/cm für Kühlsysteme in Brennstoffzellenantrieben, insbesondere für Kraftfahrzeuge.

Die erfindungsgemäßen Kühlmittelzusammensetzungen können auch in einem Brennstoffzellenaggregat gemäß DE-A 101 04 771 (6) eingesetzt werden, in dem das Kühlmedium zur Verhinderung von Korrosion zusätzlich elektrochemisch entionisiert wird.

### Beispiele

Die Erfindung wird in den folgenden Beispielen erläutert, ohne sie jedoch darauf zu beschränken.

Die erfindungsgemäßen Kühlmittelzusammensetzungen wurden in dem nachfolgend beschriebenen Test im Vergleich zu einer Kühlmittelzusammensetzung gemäß (3) bezüglich ihrer Eignung für Brennstoffzellenantriebe geprüft:

### Versuchsbeschreibung:

Fünf Aluminium-Prüfmetalle (vakuumgelötetes Al, Bezeichnung: EN-AW 3005, einseitig lotplattiert mit 10 Gew.-% EN-AW 4045; Abmessungen: 58x26x0,35 mm mit einer Bohrung von 7 mm Durchmesser) wurden gewogen, mittels einer Kunstoffschraube mit Mutter und Teflonscheiben nichtleitend verbunden und auf zwei Teflonständern in ein 1 l Becherglas mit Schliff und Glasdeckel gestellt. Anschließend wurden 1000 ml Testflüssigkeit eingefüllt. Bei den in der nachfolgenden Tabelle 1 aufgeführten Versuchen wurde ein kleiner Stoffsack mit 2,5 g eines Ionenaustauschers (Mischbettharz-Ionenaustauscher AMBERJET® UP 6040 RESIN der Firma Rohm + Haas) in die Flüssigkeit gehängt, die Beispiele in der nachfolgend aufgeführten Tabelle 2 wurden ohne die Anwesenheit eines Ionenaustauschers durchgeführt. Das Becherglas wurde mit dem Glasdeckel luftdicht verschlossen, auf 88°C aufgeheizt und die Flüssigkeit wurde mit einem Magnetrührer kräftig gerührt. Die elektrische Leitfähigkeit wurde bei Testbeginn sowie nach mehrwöchigen Abständen an einer zuvor entnommen Flüssigkeitsprobe gemessen (Leitfähigkeitsmeßgerät LF 530 der Firma WTW/Weilheim) . Nach dem Beenden der Tests wurden die Aluminiumproben visuell beurteilt und nach dem Beizen mit wäßriger Chromsäure/Phosphorsäure gemäß ASTM D 1384-94 gravimetrisch ausgewertet.

Die Ergebnisse sind den Tabellen 1 und 2 zu entnehmen.

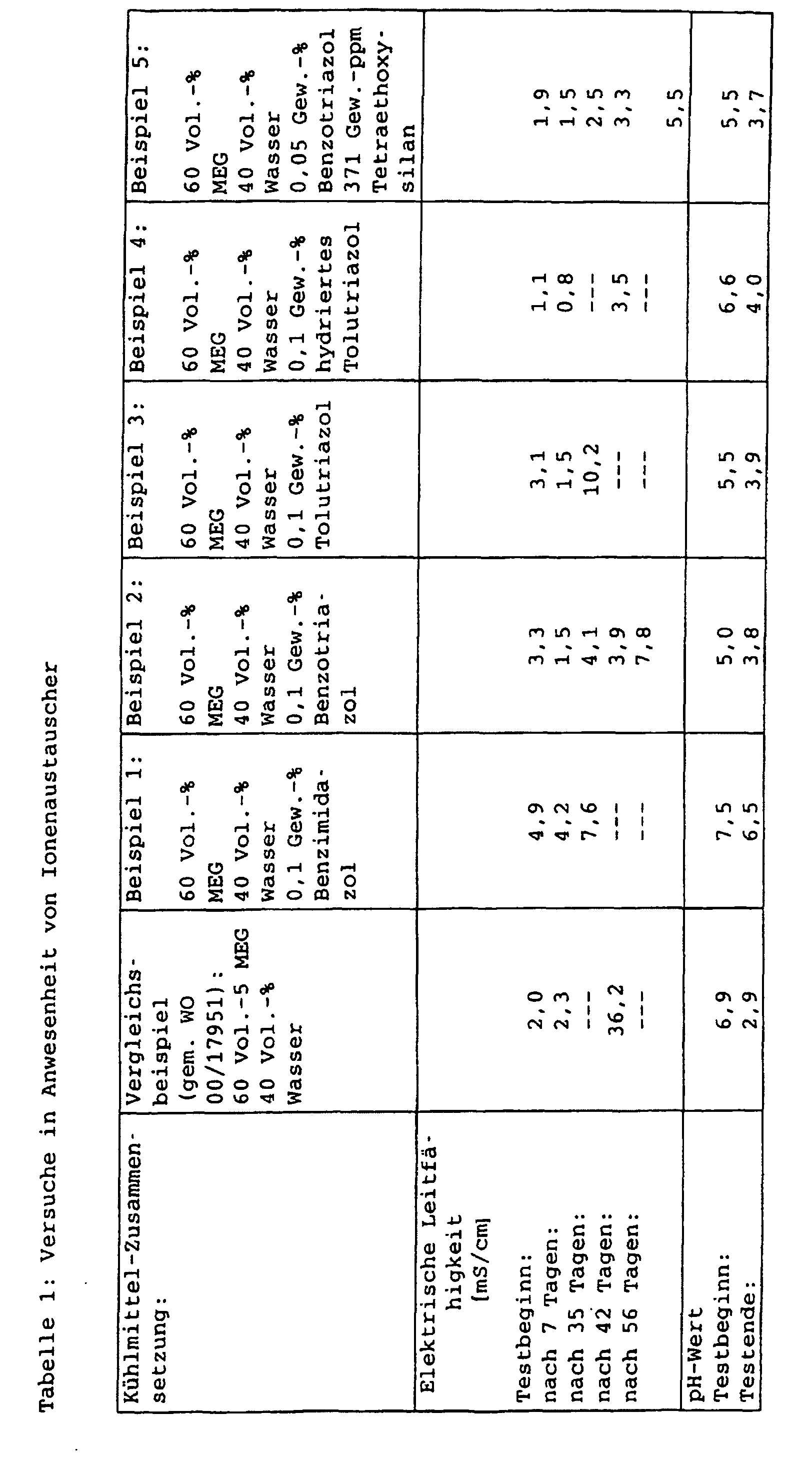

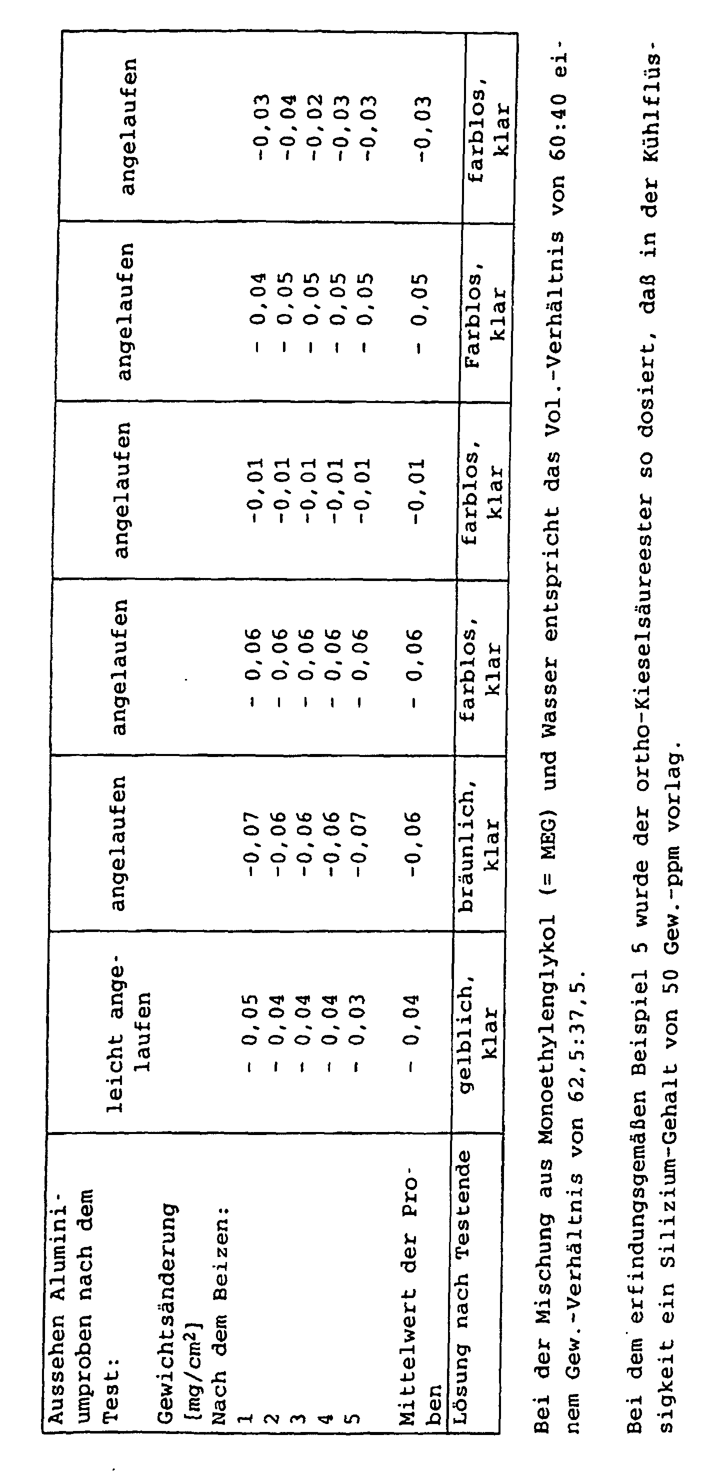

Die Ergebnisse in Tabelle 1 zeigen, daß auch nach einer ununterbrochenen Versuchsdauer von 42 Tagen bei den erfindungsgemäßen Beispielen 2 und 4 noch eine sehr geringe elektrische Leitfähigkeit von weniger als 4 µS/cm vorlag, während bei dem nicht additivierten Kühlmittel gemäß WO 00/17951 (3) mit einem Anstieg auf fast 40 µS/cm eine deutliche Verschlechterung aufgetreten war. Selbst nach einer ununterbrochenen Versuchsdauer von 56 Tagen lag bei den erfindungsgemäßen Beispielen 2 und 5 die elektrische Leitfähigkeit teilweise noch deutlich unter 8 µS/cm.

In keinem Fall trat eine nennenswerte Korrosion an den Aluminium-Proben auf.

**Tabelle 2:**

| Versuche ohne Ionenaustauscher | | | |
|---|---|---|---|
| Kühlmittel-Zusammensetzung: | Beispiel 1: | Beispiel 2: | Beispiel 3: |
| | 60 Vol.-% MEG 40 Vol.-% Wasser 0,1 Gew.-% Benzotriazol | 60 Vol.-% MEG 40 Vol.-% Wasser 0,1 Gew.-% Benzotriazol 742 Gew.-ppm Tetraethoxysilan | 60 Vol.-% MEG 40 Vol.-% Wasser 0,1 Gew.-% hydriertes Tolutriazol |

| Elektrische Leitfähigkeit [µS/cm] | | | |
|---|---|---|---|
| Testbeginn: | 3,2 | 3,2 | 2,1 |
| nach 7 Tagen: | 5,0 | 5,6 | |
| nach 14 Tagen: | 5,8 | 5,2 | 5,8 |
| nach 28 Tagen: | 8,2 | 6,9 | |
| nach 35 Tagen: | 11,2 | 6,9 | 8,6 |
| nach 42 Tagen: | 13,1 | 7,9 | 9,3 |
| nach 49 Tagen: | 16,1 | 7,6 | 9,7 |
| nach 56 Tagen: | --- | 7,8 | |
| nach 63 Tagen: | --- | 7,1 | |
| nach 77 Tagen: | --- | 6,6 | 17,5 |
| pH-Wert | | | |
| Testbeginn: | 5,0 | 5,0 | 5,2 |
| Testende: | 3,6 | 4,9 | 3,4 |
| Aussehen Aluminiumproben nach dem Test: | fast unverändert | fast unverändert | angelaufen |

| Gewichtsänderung [mg/cm²] nach dem Beizen: | | | |
|---|---|---|---|
| 1 | -0,01 | 0,00 | - 0,02 |
| 2 | 0,00 | 0,00 | - 0,02 |
| 3 | 0,00 | 0,00 | - 0,04 |
| 4 | 0,00 | 0,00 | - 0,04 |
| 5 | 0,00 | 0,00 | - 0,04 |
| Mittelwert der Proben | 0,00 | 0,00 | - 0,03 |
| Lösung nach Testende | farblos, klar | farblos, klar | farblos, klar |

Bei der Mischung aus Monoethylenglykol (= MEG) und Wasser entspricht das Vol.-Verhältnis von 60:40 einem Gew.-Verhältnis von 62,5:37,5.

Bei dem erfindungsgemäßen Beispiel 2 wurde der ortho-Kieselsäureester so dosiert, daß in der Kühlflüssigkeit ein SiliziumGehalt von 100 Gew.-ppm vorlag.

Die Ergebnisse der Tabelle 2 zeigen, daß selbst nach einer ununterbrochenen Versuchsdauer von 77 Tagen bei dem erfindungsgemäßen Beispiel 2 noch eine sehr geringe elektrische Leitfähigkeit von deutlich weniger als 10 µS/cm vorlag; auch beim erfindungsgemäßen Beispiel 3 lag die elektrische Leitfähigkeit nach 77 Tagen noch deutlich unterhalb von 20 µS/cm.

Auch bei diesen Versuchen trat keine bzw. keine nennenswerte Korrosion an den Aluminium-Proben auf.

## Patentansprüche

1. Gefrierschutzmittelkonzentrate für Kühlsysteme in Brennstoffzellenantrieben, aus welchen gebrauchsfertige wäßrige Kühlmittelzusammensetzungen mit einer Leitfähigkeit von maximal 50 µS/cm resultieren, auf Basis von Alkylenglykolen oder deren Derivaten, enthaltend eine oder mehrere fünfgliedrige heterocyclische Verbindungen (Azolderivate) mit 2 oder 3 Heteroatomen aus der Gruppe Stickstoff und Schwefel, welche kein oder maximal ein Schwefelatom enthalten und welche einen aromatischen oder gesättigten sechsgliedrigen Anellanten tragen können, sowie zusätzlich ortho-Kieselsäureester, aus welchen gebrauchsfertige wäßrige Kühlmittelzusammensetzungen mit einem Siliziumgehalt von 2 bis 2000 Gew.-ppm resultieren.

2. Gefrierschutzmittelkonzentrate für Kühlsysteme in Brennstoffzellenantrieben nach Anspruch 1, enthaltend insgesamt 0,05 bis 5 Gew.-% der Azolderivate.

3. Gefrierschutzmittelkonzentrate für Kühlsysteme in Brennstoffzellenantrieben nach Anspruch 1 oder 2, enthaltend als Azolderivate Benzimidazol, Benzotriazol, Tolutriazol und/oder hydriertes Tolutriazol.

4. Gefrierschutzmittelkonzentrate für Kühlsysteme in Brennstoffzellenantrieben nach den Ansprüchen 1 bis 3, in denen Monoethylenglykol als Alkylenglykol eingesetzt wird.

5. Gefrierschutzmittelkonzentrate für Kühlsysteme in Brennstoffzellenantrieben nach den Ansprüchen 1 bis 4, aus welchen durch Verdünnen mit ionenfreiem Wasser gebrauchsfertige wäßrige Kühlmittelzusammensetzungen mit einer Leitfähigkeit von maximal 50 µS/cm, die im wesentlichen aus
(a) 10 bis 90 Gew.-% Alkylenglykolen oder deren Derivaten,
(b) 90 bis 10 Gew.-% Wasser,
(c) 0,005 bis 5 Gew.-% der Azolderivate und
(d) ortho-Kieselsäureestern in einer Menge, dass hieraus gebrauchsfertige wässrige Kühlmittelzusammensetzungen mit einem Siliziumgehalt von 2 bis 2000 Gew.-ppm resultieren, bestehen,
resultieren.

6. Gebrauchsfertige wäßrige Kühlmittelzusammensetzungen für Kühlsysteme in Brennstoffzellenantrieben, die im wesentlichen aus
(a) 10 bis 90 Gew.-% Alkylenglykolen oder deren Derivaten,
(b) 90 bis 10 Gew.-% Wasser,
(c) 0,005 bis 5 Gew.-% der Azolderivate und
(d) ortho-Kieselsäureestern in einer Menge, dass hieraus gebrauchsfertige wässrige Kühlmittelzusammensetzungen mit einem Siliziumgehalt von 2 bis 2000 Gew.-ppm resultieren, bestehen,
erhältlich durch Verdünnen von Gefrierschutzmittelkonzentraten gemäß den Ansprüchen 1 bis 4 mit ionenfreiem Wasser.

7. Verwendung von fünfgliedrigen heterocyclischen Verbindungen (Azolderivaten) mit 2 oder 3 Heteroatomen aus der Gruppe Stickstoff und Schwefel, welche kein oder maximal ein Schwefelatom enthalten und welche einen aromatischen oder gesättigten sechsgliedrigen Anellanten tragen können, zusammen mit ortho-Kieselsäureestern zur Herstellung von Gefrierschutzmittelkonzentraten für Kühlsysteme in Brennstoffzellenantrieben auf Basis von Alkylenglykolen oder deren Derivaten.

8. Verwendung von Gefrierschutzmittelkonzentraten gemäß Anspruch 7 zur Herstellung von gebrauchsfertigen wäßrigen Kühlmittel-Zusammensetzungen mit einer Leitfähigkeit von maximal 50 µS/cm für Kühlsysteme in Brennstoffzellenantrieben.

## Claims

1. An antifreeze concentrate for cooling systems in fuel-cell drives which gives a ready-to-use aqueous coolant composition having a conductivity of at most 50 µS/cm, based on alkylene glycols or derivatives thereof and containing one or more five-membered heterocyclic compounds (azole derivatives) having 2 or 3 heteroatoms from the group consisting of nitrogen and sulfur, which contain no or at most one sulfur atom and which may carry a fused aromatic or saturated six-membered ring, and additionally orthosilicates which give a ready-to-use aqueous coolant composition having a silicon content of from 2 to 2000 ppm by weight.

2. An antifreeze concentrate for cooling systems in fuel-cell drives as claimed in claim 1, comprising a total of from 0.05 to 5% by weight of the azole derivatives.

3. An antifreeze concentrate for cooling systems in fuel-cell drives as claimed in claim 1 or 2, comprising, as azole derivatives, benzimidazole, benzotriazole, tolutriazole and/or hydrogenated tolutriazole.

4. An antifreeze concentrate for cooling systems in fuel-cell drives as claimed in any one of claims 1 to 3, in which the alkylene glycol employed is monoethylene glycol.

5. An antifreeze concentrate for cooling systems in fuel-cell drives as claimed in any one of claims 1 to 4, which gives, on dilution with ion-free water, a ready-to-use aqueous coolant composition having a conductivity of at most 50 µS/cm and which essentially consists of
(a) from 10 to 90% by weight of alkylene glycols or derivatives thereof,
(b) from 90 to 10% by weight of water,
(c) from 0.005 to 5% by weight of the azole derivatives, and
(d) orthosilicates in an amount which gives a ready-to-use aqueous coolant composition having a silicon content of from 2 to 2000 ppm by weight.

6. A ready-to-use aqueous coolant composition for cooling systems in fuel-cell drives which essentially consists of
(a) from 10 to 90% by weight of alkylene glycols or derivatives thereof,
(b) from 90 to 10% by weight of water,
(c) from 0.005 to 5% by weight of the azole derivatives, and
(d) orthosilicates in an amount which gives a ready-to-use aqueous coolant composition having a silicon content of from 2 to 2000 ppm by weight,
obtainable by dilution of an antifreeze concentrate as claimed in any one of claims 1 to 4 with ion-free water.

7. The use of a five-membered heterocyclic compound (azole derivative) having 2 or 3 heteroatoms from the group consisting of nitrogen and sulfur, which contains no or at most one sulfur atom and which may carry a fused aromatic or saturated six-membered ring, together with orthosilicates for the preparation of an antifreeze concentrate for cooling systems in fuel-cell drives based on alkylene glycols or derivatives thereof.

8. The use of an antifreeze concentrate as claimed in claim 7 for the preparation of a ready-to-use aqueous coolant composition having a conductivity of at most 50 µS/cm for cooling systems in fuel-cell drives.

## Revendications

1. Concentrés d'antigel pour des systèmes de refroidissement dans des dispositifs de production d'énergie par une pile à combustible, à partir desquels on obtient des compositions aqueuses de réfrigérant prêtes à l'emploi ayant une conductibilité d'au maximum 50 µS/cm, à base d'alkylèneglycols ou de leurs dérivés, contenant un ou plusieurs composés hétérocycliques à cinq éléments (dérivés azole) possédant 2 ou 3 hétéroatomes du groupe formé par l'azote et le soufre, lesquels ne contiennent aucun atome de soufre ou au maximum un et peuvent porter un cycle condensé aromatique ou saturé à six éléments, ainsi qu'en plus des esters d'acide orthosilicique, à partir desquels on obtient des compositions aqueuses de réfrigérant prêtes à l'emploi ayant une teneur en silicium de 2 ppm à 2 000 ppm en poids.

2. Concentrés d'antigel pour des systèmes de refroidissement dans des dispositifs de production d'énergie par une pile à combustible selon la revendication 1, contenant au total 0,05% à 5% en poids des dérivés azole.

3. Concentrés d'antigel pour des systèmes de refroidissement dans des dispositifs de production d'énergie par une pile à combustible selon la revendication 1 ou 2, contenant, en tant que dérivés azole, du benzimidazole, du benzotriazole, du tolutriazole et/ou du tolutriazole hydrogéné.

4. Concentrés d'antigel pour des systèmes de refroidissement dans des dispositifs de production d'énergie par une pile à combustible selon l'une quelconque des revendications 1 à 3, dans lesquels on met en oeuvre le monoéthylèneglycol en tant qu'alkylèneglycol.

5. Concentrés d'antigel pour des systèmes de refroidissement dans des dispositifs de production d'énergie par une pile à combustible selon l'une quelconque des revendications 1 à 4, à partir desquels on obtient des compositions aqueuses de réfrigérant prêtes à l'emploi ayant une conductibilité d'au maximum 50 µS/cm, au moyen d'une dilution dans de l'eau désionisée, lesquelles sont principalement composées de
(a) 10% à 90% en poids d'alkylèneglycols ou de leurs dérivés,
(b) 90% à 10% en poids d'eau,
(c) 0,005% à 5% en poids des dérivés azole et
(d) d'esters d'acide orthosilicique en une quantité telle que l'on obtient des compositions aqueuses de réfrigérant prêtes à l'emploi ayant une teneur en silicium de 2 ppm à 2 000 ppm en poids.

6. Compositions aqueuses de réfrigérant prêtes à l'emploi pour des systèmes de refroidissement dans des dispositifs de production d'énergie par une pile à combustible, qui sont principalement composées de
(a) 10% à 90% en poids d'alkylèneglycols ou de leurs dérivés,
(b) 90% à 10% en poids d'eau,
(c) 0,005% à 5% en poids de dérivés azole et
(d) d'esters d'acide orthosilicique dans une quantité telle que l'on obtient des compositions aqueuses de réfrigérant prêtes à l'emploi ayant une teneur en silicium de 2 ppm à 2 000 ppm en poids,
que l'on peut obtenir en diluant des concentrés d'antigel selon les revendications 1 à 4 dans de l'eau désionisée.

7. Utilisation de composés hétérocycliques à cinq éléments (dérivés azole) possédant 2 ou 3 hétéroatomes du groupe formé par l'azote et le soufre, lesquels ne contiennent aucun atome de soufre ou au maximum un et peuvent porter un cycle condensé aromatique ou saturé à six éléments, conjointement avec des esters d'acide orthosilicique pour préparer des concentrés d'antigel pour des systèmes de refroidissement dans des dispositifs de production d'énergie par une pile à combustible à base d'alkylèneglycols ou de leurs dérivés.

8. Utilisation de concentrés d'antigel selon la revendication 7 pour préparer des compositions aqueuses de réfrigérant prêtes à l'emploi ayant une conductibilité d'au maximum 50 µS/cm pour des systèmes de refroidissement dans des dispositifs de production d'énergie par une pile à combustible.
